# FASCICULE DE BREVET EUROPEEN

(11) **EP 2 828 059 B1**
(45) Date de publication et mention de la délivrance du brevet: **27.02.2019**
(21) Numéro de dépôt: 13709105.4
(22) Date de dépôt: 13.03.2013
(51) Int. Cl.: B29C 49/62, B29C 49/06, B29C 49/12, B29C 49/58, B29C 49/48, B29C 49/42

(54) **DISPOSITIF DE FABRICATION DE RÉCIPIENT PAR SOUFFLAGE DANS LEQUEL LE GAZ DE SOUFFLAGE DÉTENDU EST DIRIGÉ VERS UN ACCESSOIRE CHAUD POUR LE REFROIDIR PAR VENTILATION**
Vorrichtung ZUR HERSTELLUNG EINES BEHÄLTERS DURCH BLASEN MIT AUSRICHTUNG DES GEBLASENEN GASES AUF EIN HEISSES ZUBEHÖR ZUR KÜHLUNG DESSELBEN DURCH BELÜFTUNG
Apparatus FOR PRODUCING A CONTAINER BY BLOWING IN WHICH THE DEPRESSURIZED BLOWING GAS IS DIRECTED TOWARD A HOT ACCESSORY FOR COOLING THE LATTER BY VENTILATION

(30) Priorité: 23.03.2012 FR 1252597
(43) Date de publication de la demande: 28.01.2015
(73) Titulaire: Sidel Participations, 76930 Octeville-sur-Mer (FR)
(72) Inventeur: LECOMTE, Frédéric, F-76930 Octeville Sur Mer (FR); CHOMEL, Nicolas, F-76930 Octeville Sur Mer (FR); BOINET, Franck, F-76930 Octeville sur Mer (FR)
(74) Mandataire: Grassin d'Alphonse, Emmanuel Jean Marie
(86) Numéro de dépôt international: PCT/EP2013/055123
(87) Numéro de publication internationale: WO 2013/139658

(56) Documents cités:
- DE-U1-202007 008 120
- DE-U1-202008 005 257
- DE-U1-202008 005 257
- US-A1- 2008 136 068

## Description

La présente invention concerne un dispositif de fabrication de récipients en matériau thermoplastique par soufflage d'une préforme dans un moule.

La présente invention concerne plus particulièrement un dispositif de fabrication de récipients en matériau thermoplastique par soufflage d'une préforme, le dispositif comportant :
- une cavité de moulage destiné à recevoir une préforme ;
- une tuyère de soufflage qui est susceptible d'injecter un gaz comprimé à une pression de soufflage dans la préforme ;
- une conduite d'échappement qui raccorde la tuyère avec un orifice d'extrémité de sortie dans l'atmosphère et dans laquelle le gaz comprimé est détendu jusqu'à la pression atmosphérique de manière que le flux de gaz sortant de l'orifice de sortie soit froid ;
- un accessoire comportant une source de chaleur.

On connaît déjà des dispositifs de ce type. Pour refroidir un accessoire comportant une source de chaleur, il est connu d'utiliser un circuit de refroidissement comportant un fluide caloporteur tel que de l'eau ou du gaz.

Cependant, de tels circuits nécessitent une source d'énergie pour faire circuler le fluide caloporteur au moyen d'une pompe dédiée au refroidissement de l'accessoire.

En outre, le refroidissement du fluide caloporteur à chaque cycle est aussi consommateur d'énergie. DE202008005257U décrit un dispositif de fabrication de récipients selon le préambule de la revendication 1.

Pour résoudre notamment ces problèmes, l'invention propose un dispositif du type décrit précédemment, caractérisé en ce que l'orifice de sortie est agencé à proximité de l'accessoire chaud de manière qu'au moins une partie du flux de gaz froid sortant de l'orifice de sortie soit dirigée vers l'accessoire chaud afin de refroidir l'accessoire par ventilation.

Selon d'autres caractéristiques de l'invention :
- un silencieux est interposé dans la conduite d'échappement juste avant l'orifice de sortie ;
- l'accessoire comporte un carter réalisé en un matériau conducteur de chaleur ;
- le carter de l'accessoire est muni d'un radiateur qui est agencé sur le trajet du flux de gaz froid ;
- au moins un déflecteur est agencé à proximité de l'orifice de sortie afin d'orienter au moins une partie du flux de gaz froid en direction de l'accessoire chaud ;
- la source de chaleur est formée des composants électroniques d'une unité électronique de commande ;
- le dispositif comporte une tige d'étirage qui est montée coulissante par rapport à la cavité de moulage et qui est destinée à étirer la préforme durant une opération de soufflage, la tige d'étirage étant mue par un moteur électrique, et en ce que l'accessoire chaud est formé par une unité électronique de commande permettant de faire varier l'intensité du courant électrique d'alimentation du moteur électrique.

D'autres caractéristiques et avantages de l'invention apparaitront à la lecture de la description détaillée qui va suivre pour la compréhension de laquelle on se reportera aux dessins annexés parmi lesquels :
- la figure 1 est une vue schématique qui représente un dispositif réalisé selon les enseignements de l'invention ;
- la figure 2 est une vue en perspective du silencieux de la conduite d'échappement du dispositif de la figure 1 ;
- la figure 3 est une vue de dessus qui représente le silencieux de la figure 2 et l'accessoire chaud agencé sur le trajet du flux de gaz froid ;
- la figure 4 est une vue de face du silencieux de la figure 2.

Dans la suite de la description, on adoptera de manière non limitative des orientations longitudinale, verticale et transversale indiquées par le trièdre "L,V,T" des figures.

Dans la suite de la description, des éléments présentant une structure identique ou des fonctions analogues seront désignés par des mêmes numéros de référence.

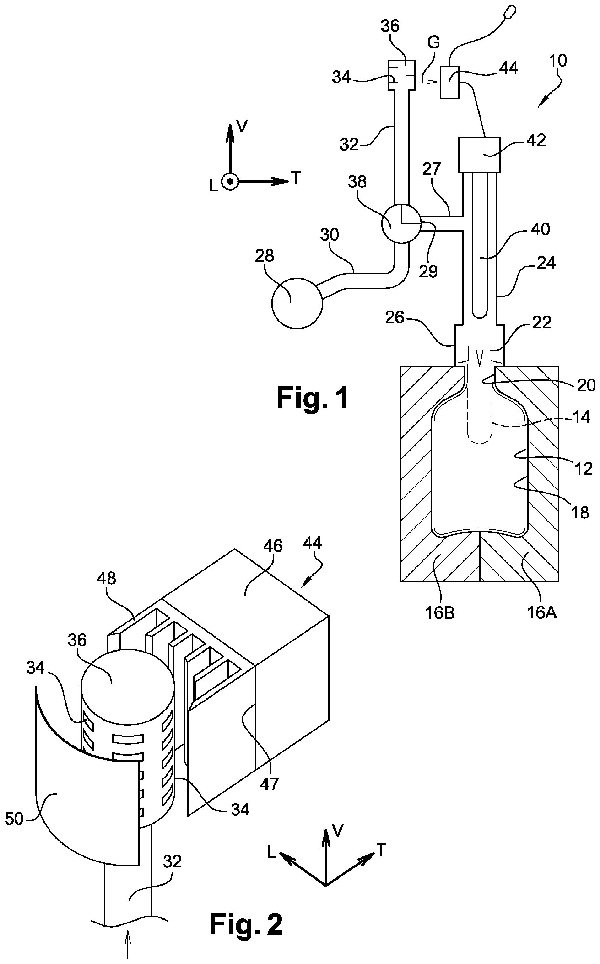

On a représenté à la figure 1 un dispositif 10 de fabrication de récipients 12 en matériau thermoplastique par soufflage d'une préforme 14. Dans l'exemple représenté à la figure 1, la préforme 14 est représentée en traits interrompus, tandis que le récipient 12 présentant sa forme définitive est représenté en trait plein.

Le dispositif 10 comporte un moule 16A, 16B réalisé en au moins deux demi-moules 16A, 16B délimitant une cavité 18 de moulage lorsque leurs deux faces de joint sont serrées transversalement l'une contre l'autre le long d'un plan vertical de joint.

La cavité 18 de moulage est destinée à recevoir le corps de la préforme 14. Un orifice 20 supérieur est prévu au niveau du plan de joint de manière à faire communiquer la cavité 18 de moulage avec l'extérieur. Un col 22 de la préforme 14 fait saillie verticalement vers le haut en passant à travers cet orifice 20.

Le corps de la préforme 14 est chauffé par un four (non représenté) de conditionnement avant d'être reçu dans la cavité 18 de moulage. Le corps en matériau thermoplastique est ainsi suffisamment malléable pour être déformé par soufflage ou par étirage-soufflage.

En variante non représentée de l'invention, la préforme est réalisée par injection de matériau thermoplastique chaud dans un moule de préforme. A la sortie du moule de préforme, le corps de la préforme présente une température suffisante pour être malléable. Dans le cadre d'un procédé de fabrication de récipients dit "one step", la préforme encore chaude est directement convoyé depuis son moule de préforme jusqu'au moule de récipient sans passer par un four de conditionnement.

Une tuyère 24 de soufflage est agencée verticalement au droit de l'orifice 20 du moule 16A, 16B. La tuyère 24 s'étend ici selon un axe sensiblement vertical au-dessus du moule 16A, 16B. La tuyère 24 présente un orifice d'extrémité inférieur dont la paroi cylindrique est évasée en forme de cloche 26.

La tuyère 24 est montée coulissante entre :
- une position supérieure de repos dans laquelle le bord inférieur libre de la cloche 26 est agencé au-dessus de la face supérieure du moule 16A, 16B, à une distance supérieure à la hauteur du col 22 ;
- et une position inférieure de soufflage dans laquelle le bord inférieur libre de la cloche 26 est en contact étanche avec la face supérieure du moule 16A, 16B, le col 22 de la préforme 14 étant ainsi coiffé de manière étanche par la cloche 26.

Par la suite, en l'absence d'indication contraire, la tuyère 24 sera considérée dans sa position inférieure de soufflage.

La tuyère 24 comporte à son extrémité supérieure une conduite 27 transversale de communication dont une première extrémité est raccordée avec l'intérieur de la tuyère 24, et dont une deuxième extrémité débouche par un orifice 29 de communication. Ainsi la conduite 30 d'alimentation et la conduite 32 d'échappement forment un embranchement au niveau de l'orifice 29 de communication.

L'orifice 29 de communication est raccordé avec une source 28 de gaz comprimé à une pression de soufflage, par exemple à 40 bars, par l'intermédiaire d'une conduite 30 d'alimentation. Le gaz est par exemple de l'air comprimé.

Une conduite 32 d'échappement raccorde aussi la tuyère 24 avec un orifice 34 d'extrémité de sortie dans l'atmosphère. La conduite 32 d'échappement est raccordée avec l'orifice 29 de communication en dérivation par rapport à la conduite 30 d'alimentation.

Un silencieux 36 est interposé dans la conduite 32 d'échappement juste avant l'orifice 34 de sortie. Le silencieux 36 qui est destiné à assourdir le bruit provoqué par la sortie du gaz à grande vitesse à l'extérieur de la conduite 32 d'échappement.

Des moyens pour raccorder alternativement la cavité 18 de moulage avec la source 28 ou avec l'orifice de sortie 34 sont interposés dans la conduite 30 d'alimentation et dans la conduite 32 d'échappement. Ces moyens sont ici formés par une vanne 38 qui est agencée à l'embranchement entre la conduite 30 d'alimentation et la conduite 32 d'échappement.

La vanne 38 est commandée entre :
- une position de soufflage dans laquelle la tuyère 24 est en communication avec la source 28, tandis que la conduite 32 d'échappement est obturée, et
- une position d'échappement, telle qu'illustrée à la figure 1, dans laquelle la tuyère 24 est en communication avec l'orifice 34 d'échappement, tandis que la conduite 30 d'alimentation est obturée.

Selon une variante non représentée de l'invention, les moyens pour raccorder alternativement la cavité de moulage avec la source ou avec l'orifice sont formés par un ensemble de vannes. Une première vanne est ainsi interposée dans la conduite d'alimentation en amont de l'embranchement, tandis qu'une deuxième vanne est interposée dans la conduite d'échappement. Les deux vannes sont commandées simultanément entre la position de soufflage et la position d'échappement décrite au paragraphe précédent.

S'agissant ici d'un dispositif 10 de fabrication par étirage-soufflage, une tige 40 verticale d'étirage est montée coulissante verticalement dans la tuyère 24 coaxialement à l'orifice 20 du moule 16A, 16B. La tige 40 est ainsi susceptible de coulisser entre une position supérieure de retrait dans laquelle une extrémité inférieure libre de la tige 40 est agencée à distance au-dessus du fond de la préforme 14, et une position inférieure d'étirage dans laquelle l'extrémité inférieure libre de la tige 40 pousse le fond de la préforme 14 vers le fond de la cavité 18 de moulage en étirant les parois malléables de la préforme 14.

La tige 40 d'étirage est mue par un moteur 42 électrique linéaire qui est commandé par une unité 44 électronique de commande. L'unité 44 électronique de commande permet de faire varier l'intensité du courant électrique d'alimentation du moteur électrique.

L'unité 44 électronique de commande est agencée dans un carter 46 qui est distinct du carter du moteur 42 électrique. L'unité 44 électronique de commande peut ainsi être agencée à distance du moteur 42 électrique.

Lors d'une opération de soufflage, la vanne 38 est commandée vers sa position de soufflage. La tuyère 24 est alors en communication avec la source 28 de gaz comprimé. La tuyère 24 injecte le gaz comprimé à la pression de soufflage dans la préforme 14. Les parois de la préforme 14 chaude se déforment alors de manière à venir épouser la paroi intérieure de la cavité 18 de moulage pour former le récipient 12 définitif.

Lorsque le récipient 12 a atteint sa forme définitive, le récipient 12 et la tuyère 24 sont remplis de gaz à la pression de soufflage. Avant de pouvoir extraire le récipient 12 de la cavité 18 de moulage en écartant les deux demi-moules 16A, 16B transversalement l'un de l'autre, il est nécessaire d'évacuer ce gaz comprimé. Pour ce faire, la vanne 38 est commandée vers sa position d'échappement de manière à raccorder la tuyère 24 avec l'orifice 34 de sortie.

Le gaz comprimé contenu dans le récipient 12 et dans la tuyère 24 s'échappe alors en passant par la conduite 27 de communication, puis par la conduite 32 d'échappement.

Du fait de la pression du gaz dans la tuyère 24, un flux de gaz s'échappe à très grande vitesse dans l'atmosphère à travers l'orifice 34 de sortie. Ceci est susceptible de provoquer une onde de choc bruyante. Le silencieux 36 permet d'assourdir le bruit provoqué par la sortie du gaz.

Dans la tuyère 24, le gaz est comprimé à la pression de soufflage, tandis qu'au niveau de l'orifice 34 de sortie, le gaz est totalement détendu de manière que sa pression soit sensiblement égale à la pression atmosphérique. Cette détente rapide du gaz comprimé provoque une baisse importante de la température du gaz. Le flux d'air est ainsi projeté par impulsions sur l'accessoire, une impulsion correspondant à un cycle de formage d'un récipient par ladite tuyère.

Le gaz atteint sa température minimale au niveau de l'orifice 34 de sortie. Ainsi, le flux de gaz s'échappant de l'orifice 34 de sortie est très froid.

L'invention propose d'utiliser ce flux d'air froid totalement détendu pour ventiler depuis l'extérieur un accessoire comportant une source de chaleur. Dans l'exemple représenté aux figures, l'accessoire est formé par l'unité 44 électronique de commande dont les composants électroniques sont susceptibles de dégager de la chaleur.

Pour ce faire, l'orifice 34 de sortie de la conduite 32 d'échappement est agencé à proximité de l'unité 44 électronique de commande. Ainsi, au moins une partie du flux de gaz froid est dirigé vers l'unité 44 électronique de commande chaude afin de refroidir cette dernière.

On a représenté plus en détail l'agencement de l'orifice 34 de sortie par rapport à l'unité 44 électronique de commande à la figure 2.

Le silencieux 36 présente une forme cylindrique d'axe vertical. L'orifice 34 de sortie est formé par une pluralité d'évents qui sont agencés régulièrement dans la face cylindrique du silencieux 36. De ce fait, le flux de gaz froid s'écoule radialement dans toutes les directions depuis le silencieux 36.

L'unité 44 électronique de commande comporte un carter 46 qui renferme les composants électroniques (non représentés). Une face 47 d'extrémité transversale du carter 46, dite "face 47 exposée", est agencée sur le trajet du flux de gaz froid sortant de l'orifice 34 de sortie.

Au moins la face 47 exposée du carter 46 est réalisé en un matériau conducteur de chaleur de manière à favoriser le refroidissement des composants électroniques par contact avec le flux de gaz froid.

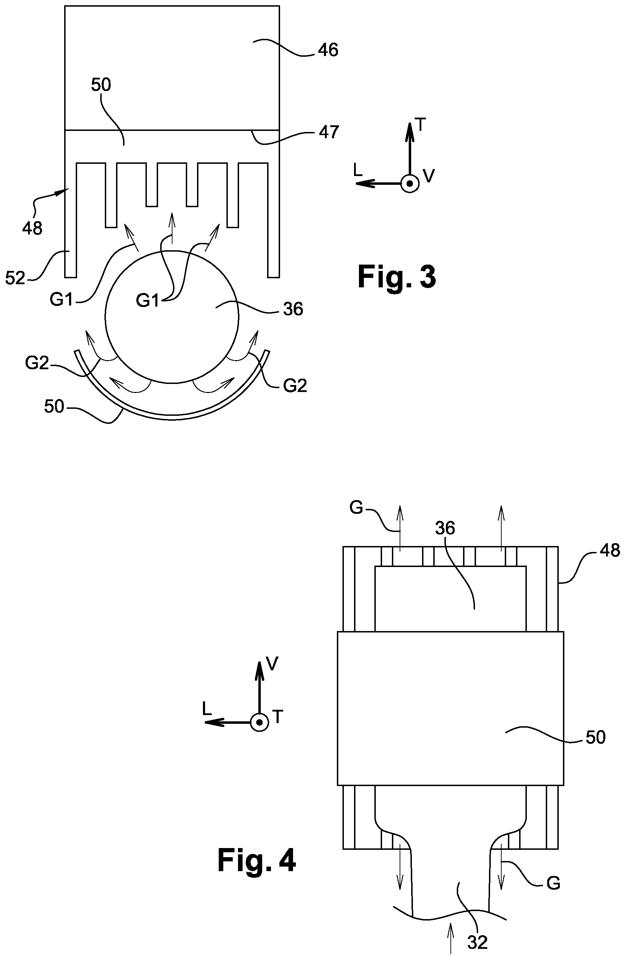

Du fait de la répartition des évents formant l'orifice 34 de sortie, seule une partie du flux de gaz est dirigée directement vers la face 47 exposée du carter 46, comme indiqué par les flèches "G1" de la figure 3.

Pour améliorer le refroidissement du carter 46, un déflecteur 50 est agencé à proximité du silencieux 36 afin d'orienter le reste du flux de gaz froid en direction de la face 47 exposée du carter 46, comme cela est illustré par les flèches "G2" de la figure 3. Le déflecteur 50 est agencé de manière à rediriger le flux de gaz qui s'échappe à l'opposé du carter 46 en direction de la face 47 exposée.

Pour favoriser encore le refroidissement, le carter 46 est muni d'un radiateur 48 qui est agencé sur le trajet du flux de gaz froid. Le radiateur 48 est formé d'une semelle 50 verticale longitudinale dont une première face est plaquée contre la face 47 exposée du carter 46. Des ailettes 52 verticales s'étendent transversalement en direction du silencieux 36 depuis la face opposée de la semelle 50. Les ailettes 52 permettent d'augmenter la surface de carter 46 exposée au flux de gaz froid.

Ainsi, comme indiqué par les flèches "G" de la figure 4, le flux de gaz froid circule entre les ailettes 52 en se divisant en deux. Une partie du flux de gaz s'écoule vers le haut, tandis que l'autre partie du flux de gaz froid s'écoule vers le bas.

Ainsi, lors de chaque cycle de soufflage, l'unité 44 électronique de commande émet de la chaleur lors du coulissement de la tige 40 d'élongation. Puis, lors de l'échappement du gaz comprimé, le flux de gaz froid vient ventiler le carter 46 de l'unité 44 électronique de commande pour refroidir cette dernière.

Le carter 46 de l'unité 44 électronique de commande est ainsi refroidi par ventilation en utilisant le flux de gaz froid sortant, sans consommation supplémentaire d'énergie. Le flux de gaz est en effet refroidi naturellement par détente du gaz comprimé.

L'invention a été décrite pour le refroidissement d'une unité électronique de commande. On comprendra cependant que l'invention est applicable à tout accessoire qui est agencé à proximité du moule et qui est susceptible d'être refroidi par ventilation.

## Revendications

1. Dispositif (10) de fabrication de récipients (12) en matériau thermoplastique par soufflage d'une préforme (14), le dispositif (10) comportant :
- une cavité (18) de moulage destiné à recevoir une préforme (14) ;
- une tuyère (24) de soufflage qui est susceptible d'injecter un gaz comprimé à une pression de soufflage dans la préforme (14) ;
- une conduite (32) d'échappement qui raccorde la tuyère (24) avec un orifice (34) d'extrémité de sortie dans l'atmosphère et dans laquelle le gaz comprimé est détendu jusqu'à la pression atmosphérique de manière que le flux de gaz sortant de l'orifice (34) de sortie soit froid ;
- un accessoire (44) comportant une source de chaleur ; **caractérisé en ce que** l'orifice (34) de sortie est agencé à proximité de l'accessoire (44) chaud de manière qu'au moins une partie du flux de gaz froid sortant de l'orifice de sortie soit dirigée vers l'accessoire (44) chaud afin de refroidir l'accessoire (44) par ventilation.

2. Dispositif (10) selon la revendication précédente, **caractérisé en ce qu'**un silencieux (36) est interposé dans la conduite (32) d'échappement juste avant l'orifice (34) de sortie.

3. Dispositif (10) selon l'une quelconque des revendications précédentes, **caractérisé en ce que** l'accessoire comporte un carter (46) réalisé en un matériau conducteur de chaleur.

4. Dispositif (10) selon l'une quelconque des revendications précédentes, **caractérisé en ce que** le carter (46) de l'accessoire (44) est muni d'un radiateur (48) qui est agencé sur le trajet du flux de gaz froid.

5. Dispositif (10) selon l'une quelconque des revendications précédentes, **caractérisé en ce qu'**au moins un déflecteur (50) est agencé à proximité de l'orifice (34) de sortie afin d'orienter au moins une partie du flux de gaz froid en direction de l'accessoire (44) chaud.

6. Dispositif (10) selon l'une quelconque des revendications précédentes, **caractérisé en ce que** la source de chaleur est formée des composants électroniques d'une unité (44) électronique de commande.

7. Dispositif (10) selon la revendication précédente, **caractérisé en ce qu'**il comporte une tige (40) d'étirage qui est montée coulissante par rapport à la cavité (18) de moulage et qui est destinée à étirer la préforme (14) durant une opération de soufflage, la tige (40) d'étirage étant mue par un moteur (42) électrique, et **en ce que** l'accessoire chaud est formé par une unité (44) électronique de commande permettant de faire varier l'intensité du courant électrique d'alimentation du moteur (42) électrique.

## Patentansprüche

1. Vorrichtung (10) zur Herstellung von Behältern (12) aus thermoplastischem Material durch Blasen einer Preform (14), wobei die Vorrichtung (10) Folgendes aufweist:
- einen Formungshohlraum (18), der dazu bestimmt ist, eine Preform (14) aufzunehmen;
- eine Blasdüse (24), die geeignet ist, ein Druckgas mit einem Blasdruck in die Preform (14) einzuspritzen;
- eine Abgasleitung (32), die die Düse (24) mit einer Endöffnung (34) zum Austritt in die Atmosphäre verbindet, und in welcher das Druckgas bis auf den Atmosphärendruck ausgedehnt wird, damit der Gasstrom, der aus der Austrittsöffnung (34) austritt, kalt ist;
- ein Zubehör (44), das eine Wärmequelle aufweist; **dadurch gekennzeichnet, dass** die Austrittsöffnung (34) in der Nähe des heißen Zubehörs (44) angeordnet ist, damit mindestens ein Teil des Stroms kalten Gases, das aus der Austrittsöffnung austritt, in Richtung des heißen Zubehörs (44) geleitet wird, um das Zubehör (44) durch Lüftung zu kühlen.

2. Vorrichtung (10) nach dem vorhergehenden Anspruch, **dadurch gekennzeichnet, dass** ein Schalldämpfer (36) in der Abgasleitung (32) kurz vor der Austrittsöffnung (34) angeordnet ist.

3. Vorrichtung (10) nach einem der vorhergehenden Ansprüche, **dadurch gekennzeichnet, dass** das Zubehör ein Gehäuse (46) aufweist, das aus einem wärmeleitenden Material hergestellt ist.

4. Vorrichtung (10) nach einem der vorhergehenden Ansprüche, **dadurch gekennzeichnet, dass** das Gehäuse (46) des Zubehörs (44) mit einem Kühlkörper (48) versehen ist, der auf der Bahn des Stroms kalten Gases angeordnet ist.

5. Vorrichtung (10) nach einem der vorhergehenden Ansprüche, **dadurch gekennzeichnet, dass** mindestens ein Deflektor (50) in der Nähe der Austrittsöffnung (34) angeordnet ist, um mindestens einen Teil des Stroms kalten Gases in Richtung des heißen Zubehörs (44) zu leiten.

6. Vorrichtung (10) nach einem der vorhergehenden Ansprüche, **dadurch gekennzeichnet, dass** die Wärmequelle von elektronischen Komponenten einer elektronischen Steuereinheit (44) gebildet ist.

7. Vorrichtung (10) nach dem vorhergehenden Anspruch, **dadurch gekennzeichnet, dass** sie eine Streckstange (40) aufweist, die bezogen auf den Formungshohlraum (18) verschiebbar angebracht ist, und die dazu bestimmt ist, die Preform (14) während eines Blasvorgangs zu strecken, wobei die Streckstange (40) von einem Elektromotor (42) bewegt wird, und dadurch, dass das heiße Zubehör von einer elektronischen Steuereinheit (44) gebildet ist, die es ermöglicht, die Stärke des elektrischen Stroms zur Versorgung des Elektromotors (42) zu ändern.

## Claims

1. Device (10) for producing containers (12) made of a thermoplastic material by blowing a preform (14), the device (10) including:
- a moulding cavity (18) which is intended to receive a preform (14);
- a blowing nozzle (24) which is capable of injecting a compressed gas at a blowing pressure into the preform (14);
- an exhaust pipe (32) which connects the nozzle (24) to an end outlet orifice (34) to the atmosphere, and in which the compressed gas is depressurized to the atmospheric pressure so that the gas stream exiting the outlet orifice (34) is cold;
- an accessory (44) including a heat source;
**characterized in that** the outlet orifice (34) is arranged near the hot accessory (44) so that at least a portion of the cold gas stream exiting the outlet orifice is directed toward the hot accessory (44) in order to cool the accessory (44) by ventilation.

2. Device (10) according to the preceding claim, **characterized in that** a silencer (36) is disposed in the exhaust pipe (32) just before the outlet orifice (34).

3. Device (10) according to either one of the preceding claims, **characterized in that** the accessory includes a casing (46) made from a thermally conductive material.

4. Device (10) according to any one of the preceding claims, **characterized in that** the casing (46) of the accessory (44) is provided with a heatsink (48) that is arranged on the path of the cold gas stream.

5. Device (10) according to any one of the preceding claims, **characterized in that** at least one deflector (50) is arranged near the outlet orifice (34) in order to orient at least a portion of the cold gas stream in the direction of the hot accessory (44).

6. Device (10) according to any one of the preceding claims, **characterized in that** the heat source is formed of the electronic components of an electronic control unit (44).

7. Device (10) according to the preceding claim, **characterized in that** it includes a stretching rod (40) that is mounted to slide relative to the moulding cavity (18) and is intended to stretch the preform (14) during a blowing operation, the stretching rod (40) being moved by an electric motor (42), and **in that** the hot accessory is formed by an electronic control unit (44) enabling variation of the intensity of the electrical power supply current of the electric motor (42).
